# EUROPÄISCHE PATENTSCHRIFT

(11) **EP 3 020 936 B1**
(45) Veröffentlichungstag und Bekanntmachung des Hinweises auf die Patenterteilung: **02.08.2017**
(21) Anmeldenummer: 15190716.9
(22) Anmeldetag: 21.10.2015
(51) Int. Cl.: F01N 3/20

(54) **ABGASNACHBEHANDLUNGSEINRICHTUNG FÜR EINE BRENNKRAFTMASCHINE**
EXHAUST GAS AFTER-TREATING DEVICE FOR AN INTERNAL COMBUSTION ENGINE
DISPOSITIF DE POST-TRAITEMENT DES GAZ D'ÉCHAPPEMENT POUR UN MOTEUR À COMBUSTION INTERNE

(30) Priorität: 17.11.2014 DE 102014223379
(43) Veröffentlichungstag der Anmeldung: 18.05.2016
(73) Patentinhaber: ROBERT BOSCH GMBH, 70442 Stuttgart (DE)
(72) Erfinder: Burger, Matthias, 71711 Murr (DE); Rademann, Sascha, 70469 Stuttgart (DE)

(56) Entgegenhaltungen:
- DE-A1-102011 090 070
- DE-A1-102012 209 689
- DE-A1-102012 211 112

## Beschreibung

Die Erfindung betrifft eine Abgasnachbehandlungseinrichtung für eine Brennkraftmaschine, insbesondere eines Kraftfahrzeugs, mit einem Dosierventil zum dosierten Einspritzen eines flüssigen Abgasnachbehandlungsmittels in ein Abgas der Brennkraftmaschine, mit einer Fördereinrichtung zum Fördern des flüssigen Abgasnachbehandlungsmittels von einem Tank zu dem Dosierventil.

### Stand der Technik

Abgasnachbehandlungseinrichtungen der eingangs genannten Art sind aus dem Stand der Technik bekannt. Um die Schadstoffemissionen von Kraftfahrzeugen zu verringern, ist es bekannt, dem Abgas der Brennkraftmaschine ein Abgasnachbehandlungsmittel, beispielsweise eine wässrige Harnstofflösung, zuzuführen, sodass diese zusammen mit dem Abgas in einem stromabwärtsliegenden Katalysator die Schadstoffemissionen reduzierend reagiert. Derartige Abgasnachbehandlungseinrichtungen müssen eisdruckfest ausgebildet sein, weil der Gefrierpunkt des üblicherweise verwendeten Abgasnachbehandlungsmittels bei etwa -11°C liegt. Um die Kosten der Abgasnachbehandlungseinrichtung gering zu halten, weist diese häufig ein nichteisdruckfestes Dosierventil auf, das im Abstellfall der Einrichtung gegen Eisdruck geschützt werden muss. Hierzu wird heutzutage mittels einer Rücksaugung das flüssige Abgasnachbehandlungsmittel beim Abstellen der Einrichtung aus dem Dosierventil und Verbindungsleitungen zurück zu dem Tank gefördert. Auf diese Weise wird das Dosierventil entleert und ist damit geschützt vor Eisbildung. Viele Fördereinrichtungen, insbesondere Membranpumpen, haben inhärent einen Flutungsschutz, da ein Zurückfließen des flüssigen Abgasnachbehandlungsmittels in das Einspritzsystem, nachdem es aus dem System zurückgesaugt wurde, verhindert. Andere Fördereinrichtungen, wie beispielsweise Zahnradpumpen, haben diese Eigenschaft jedoch nicht.

Aus der DE 10 2011 090 070 ist es bekannt, zwischen einer Fördereinrichtung und einem Dosiermodul ein Absperrvenil anzuordnen.

### Offenbarung der Erfindung

Die erfindungsgemäße Abgasnachbehandlungseinrichtung mit den Merkmalen des Anspruchs 1 hat den Vorteil, dass auf kostengünstige Art und Weise die Eisdrucksichert des Dosierventils unabhängig von der Art der Fördereinrichtung gewährleistet ist. Erfindungsgemäß ist hierzu vorgesehen, dass zwischen Fördereinrichtung und Dosierventil ein Sperrventil geschaltet ist, das als durch den Förderdruck im Dosierbetrieb der Fördereinrichtung öffenbares Rückschlagventil ausgebildet ist, dem eine Einrichtung zugeordnet ist, die bei ihrer Betätigung das Sperrventil unabhängig von dem Förderdruck öffnet. Die erfindungsgemäße Ausbildung sieht also ein Sperrventil vor, das im Wesentlichen als Rückschlagventil ausgebildet ist. Das Rückschlagventil öffnet dann selbsttätig, wenn das Dosiermittel von dem Tank zu dem Dosierventil durch Fördereinrichtung gefördert wird. Dazu ist beispielsweise ein Ventilkörper vorgesehen, der durch das geförderte Abgasnachbehandlungsmittel entgegen der Kraft wenigstens eines Federelements von einem Ventilsitz weggedrängt wird. Um ein Rücksaugen des Abgasnachbehandlungsmittels von dem Dosierventil in Richtung des Tanks zu ermöglichen, ist die Einrichtung vorgesehen, die das Sperrventil unabhängig von dem Förderdruck öffnet. Dadurch kann für einen Rücksaugbetrieb, in welchem das Rückschlagventil aufgrund der Druckverhältnisse eigentlich schließen würde, um ein Zurückfließen beziehungsweise eine Leckage in Richtung des Dosierventils zu verhindern, eine Durchströmungsöffnung des Sperrventils freigegeben werden, sodass das Abgasnachbehandlungsmittel von der Fördereinrichtung angesaugt werden kann. Insbesondere ist vorgesehen, dass die Einrichtung das Rückschlagventil bei Bedarf öffnet.

Gemäß einer bevorzugten Ausführungsform der Erfindung ist vorgesehen, dass die Einrichtung wenigstens einen elektromagnetischen oder piezoelektrischen Aktuator aufweist. Der elektromagnetische Aktuator wirkt beispielsweise magnetisch mit dem zuvor bereits genannten Ventilkörper zusammen, um diesen entgegen der Kraft eines Federelements von dem Ventilsitz zu lösen. Durch den elektrischen Aktuator ist das Sperrventil einfach und verlässlich unabhängig vom Förderdruck offenbart. Da das Sperrventil nur beim Rückfördern des Abgasnachbehandlungsmittels aktiv durch die Einrichtung geöffnet werden muss, entsteht nur ein geringfügiger Energieverbrauch.

Gemäß einer vorteilhaften Weiterbildung der Erfindung ist vorgesehen, dass der elektromagnetische Aktuator eine bestrombare Spule und einen mit der Spule magnetisch zusammenwirkenden Anker aufweist, wobei der Anker mit einem Ventilelement des Rückschaltventils wirkverbunden ist. Insbesondere kann ein herkömmlicher elektromagnetischer Aktuator verwendet werden.

Besonders bevorzugt ist das Ventilelement des Rückschlagventils als der Anker ausgebildet. Dadurch wird ein kompakter Aktuator beziehungsweise ein kompaktes Sperrventil gewährleistet.

Gemäß einer bevorzugten Weiterbildung der Erfindung ist weiterhin vorgesehen, dass das Ventilelement durch wenigstens ein Federelement in einen Ventilsitz zum Verschließen einer Ventilöffnung des Sperrventils gedrängt wird, wobei der Aktuator dazu ausgebildet ist, dass Ventilelement entgegen der Federkraft des Federelements -wie bereits erwähnt- zu bewegen.

Weiterhin ist bevorzugt vorgesehen, dass die Federkraft des Federelements derart gewählt ist, dass das Ventilelement die Ventilöffnung freigibt, wenn die Fördereinrichtung Abgasnachbehandlungsmittel zu dem Dosierventil fördert, und verschließt, wenn die Fördereinrichtung abgeschaltet ist. Hieraus ergibt sich die zuvor bereits erläuterte Funktion des Sperrventils.

Besonders bevorzugt sind das Federelement und/oder das Ventilelement auf der der Fördereinrichtung abgewandten Seite der Ventilöffnung angeordnet, sodass das Sperrventil selbst ebenfalls nach einem Rücksaugen des Abgasnachbehandlungsmittels eisdruckfest ist. Dadurch wird insbesondere erreicht, dass auch eine das Federelement lagernde Hülse des Sperrventils auf der der Fördereinrichtung abgewandten Seite der Ventilöffnung liegt. Dadurch wird sichergestellt, dass in der Hülse befindliche Flüssigkeit durch das Rückfördern aus der Hülse entfernt und damit nicht in der Hülse frieren, expandieren und die Hülse beschädigen kann.

Im Folgenden soll die Erfindung anhand der Zeichnung näher erläutert werden. Dazu zeigen
- Figur 1: eine schematische Darstellung einer vorteilhaften Abgasnachbehandlungseinrichtung gemäß einem ersten Ausführungsbeispiel und
- Figur 2: die Abgasnachbehandlungseinrichtung gemäß einem zweiten Ausführungsbeispiel.

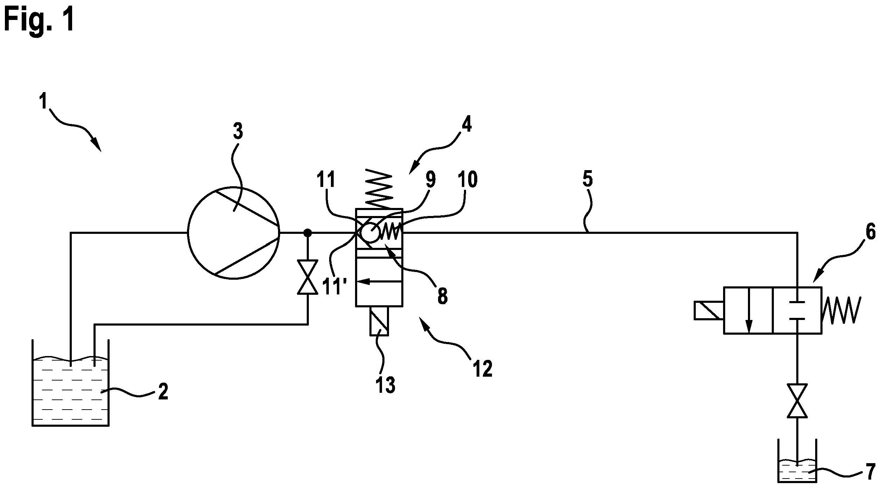

Figur 1 zeigt in einer vereinfachten Darstellung ein erstes Ausführungsbeispiel einer vorteilhaften Abgasnachbehandlungseinrichtung 1 für eine Brennkraftmaschine eines Kraftfahrzeugs. Die Abgasnachbehandlungseinrichtung weist einen Tank 2 auf, in welchem flüssiges Abgasnachbehandlungsmittel, insbesondere eine wässrige Harnstofflösung, bereitgestellt wird. Weiterhin ist eine Fördereinrichtung 3 vorgesehen, insbesondere eine Zahnradpumpe, die saugseitig mit dem Tank 2 verbunden ist, um von diesem flüssiges Abgasnachbehandlungsmittel anzusaugen. Der Fördereinrichtung 3 ist ein Sperrventil 4 nachgeschaltet, dass später näher erläutert werden soll.

Dem Sperrventil 4 folgt eine Druckleitung 5, die zur einem betätigbaren Dosierventil 6 führt, welches dazu ausgebildet ist, durch seine Betätigung das Abgasnachbehandlungsmittel dosiert in ein Abgasrohr 7 der Brennkraftmaschine einzuspritzen, sodass es dort mit dem Abgas der Brennkraftmaschine vermischt wird und beispielsweise in einem Katalysator schadstoffreduzierend reagiert.

Das Sperrventil 4 weist ein Rückschlagventil 8 auf, das selbsttätig öffnet, wenn die Fördereinrichtung 3 das Abgasnachbehandlungsmittel zu dem Dosierventil 6 fördert, und selbsttätig schließt, wenn ein Förderdruck der Fördereinrichtung 3 nicht mehr dazu ausreicht, ein Ventilelement 9 des Rückschlagventils 8 gegen die Kraft eines Federelementes 10 von einem Ventilsitz 11 zu lösen. Wird somit der Betrieb der Fördereinrichtung 3 beendet oder ein Rücksaugvorgang eingeleitet, schließt das Rückschlagventil 8 automatisch eine Ventilöffnung 11' in dem Ventilsitz 11 durch das Ventilelement 9. Dadurch ist gewährleistet, dass wenn die Fördereinrichtung 3 abgeschaltet ist, Abgasnachbehandlungsmittel nicht von selbst durch das Sperrventil 8 hindurch in das Einspritzsystem, bestehend aus der Druckleitung und dem Dosierventil 6, gelangen kann, sodass nach einem Rücksaugvorgang das Dosiersystem abgasmittelfrei bleibt und dadurch eisdruckfest ist. Das Sperrventil 4 bietet somit einen Leckageschutz, der das ungewollte Befüllen des Einspritzsystems verhindert und dadurch die Eisdrucksicherheit gewährleistet.

Damit ein Rücksaugen des Abgasnachbehandlungsmittels aus dem Einspritzsystem in den Tank 2 möglich ist, weist das Sperrventil 4 außerdem eine Einrichtung 12 auf, die bei ihrer Betätigung das Sperrventil 4 unabhängig von dem Förderdruck der Fördereinrichtung 3 erfüllt. Vorliegend ist dazu vorgesehen, dass das Sperrventil 4 als 2/2-Wegeventil ausgebildet ist, wobei in einem ersten Schaltzustand das Rückschlagventil 8 wirkt, und in einem zweiten Schaltzustand ein Durchströmungsquerschnitt des Sperrventils 4 in beide Strömungsrichtungen freigegeben ist. Die Einrichtung 12 weist dazu einen Aktuator 13 auf, der das Sperrventil 4 entgegen der Kraft eines Federelementes von dem ersten Schaltzustand in den zweiten Schaltzustand verstellt.

Um die Eisdruckfestigkeit des Einspritzsystems herzustellen, wird die Einrichtung 12 betätigt, sodass der Durchströmungsquerschnitt des Sperrventils 4 freigegeben ist beziehungsweise das Sperrventil 4 geöffnet ist, und die Fördereinrichtung 3 zum Rücksaugen des Abgasnachbehandlungsmittels aus dem Einspritzsystem angesteuert. Nach erfolgtem Rücksaugen wird die Betätigung der Einrichtung 12 und der Fördereinrichtung 3 beendet. Dadurch schaltet das Sperrventil 4 wieder in den ersten Schaltzustand zurück, in welchem das Rückschlagventil 8 wirkt, wodurch ein Rückfließen von Abgasnachbehandlungsmittel in das Einspritzsystem sicher verhindert ist, wie oben bereits beschrieben.

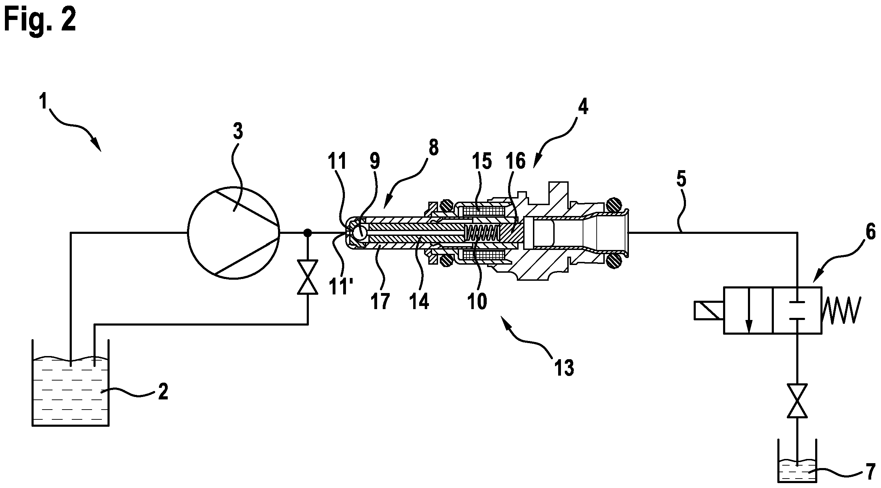

Figur 2 zeigt ein zweites Ausführungsbeispiel der Abgasnachbehandlungseinrichtung 1. Aus Figur 1 bereits bekannte Elemente sind mit den gleichen Bezugszeichen versehen, sodass insofern auf die oben bestehende Beschreibung verwiesen wird. Im Folgen soll im Wesentlichen auf die Unterschiede eingegangen werden.

Im Unterschied zu dem vorhergehenden Ausführungsbeispiel ist nunmehr vorgesehen, dass das Sperrventil 4 in der Art eines Dosierventils oder Einspritzventils ausgebildet und in verkehrter Wirkrichtung der Fördereinrichtung 3 nachgeschaltet ist.

Dabei gleicht die Ausbildung dem Rückschlagventil 8, dem zusätzlich der Aktuator 13 zugeordnet ist, nur dass diesmal der Aktuator 13 das Ventilelement 9 oder einen mit dem Ventilelement 9 verbundenen Anker 14 mit einer Betätigungskraft beaufschlagt, um das Ventilelement 9 von dem Ventilsitz 9 zu lösen. Der Aktuator 13 ist dabei als elektromagnetischer Aktuator 13 ausgebildet, der eine bestrombare Spule 15 aufweist, die mit einem fest in einem zylinderförmigen Gehäuse angeordneten Polkern 16 zusammenwirkt. Zwischen dem Polkern 16 und dem Ventilelement 9 ist das Federelement 10 vorgespannt angeordnet, welches das Ventilelement 9 bei Nichtbetätigung des Aktuators 13 gegen Ventilsitz 11 drängt, um die Ventilöffnung 11' zu verschließen. Das Federelement 10 und das Ventilelement 9 sind somit auf der der Fördereinrichtung 3 abgewandten Seite der Ventilöffnung 11' angeordnet, sodass auch eine zusammen mit dem Ventilelement einem Ventilraum bildende und das Ventilelement 9 gegebenenfalls lagernde Hülse 17 auf der der Fördereinrichtung 3 abgewandten Seite liegt.

Dadurch, dass das Federelement 10, das Ventilelement 9 und die Hülse 17 stromabwärts des Ventilsitzes 11 (in normal-Förderrichtung) liegen, ist auch das Sperrventil 4 insgesamt eisdrucksicher ausgebildet. Bei einem Rücksaugvorgang wird auch das in dem Sperrventil 4, insbesondere das in dem genannten Ventilraum befindliche Abgasnachbehandlungsmittel zurückgesaugt und damit das Sperrventil 4 entleert, sodass es anschließend, wenn die Betätigung des Sperrventils beziehungsweise des Aktuators 13 beendet wurde, aufgrund des vorteilhaften Leckageschutzes durch das Rückschlagventil 8 sicher vor einen Wiederbefüllen geschützt ist.

## Patentansprüche

1. Abgasnachbehandlungseinrichtung (1) für eine Brennkraftmaschine, insbesondere eines Kraftfahrzeugs, mit einem Dosierventil (6) zum dosierten Einspritzen eines flüssigen Abgasnachbehandlungsmittels in ein Abgas der Brennkraftmaschine, mit einer Fördereinrichtung (3) zum Fördern des flüssigen Abgasnachbehandlungsmittels von einem Tank (2) zu dem Dosierventil (6), **dadurch gekennzeichnet, dass** zwischen der Fördereinrichtung und dem Dosierventil (6) ein Sperrventil (4) geschaltet ist, das als durch einen Förderdruck der Fördereinrichtung (3) öffenbares Rückschlagventil (8) ausgebildet ist, und dem eine Einrichtung (12) zugeordnet ist, die bei ihrer Betätigung das Sperrventil (4) unabhängig von dem Förderdruck öffnet.

2. Abgasnachbehandlungseinrichtung nach Anspruch 1, **dadurch gekennzeichnet, dass** die Einrichtung (12) bei ihrer Betätigung das Rückschlagventil (8) öffnet.

3. Abgasnachbehandlungseinrichtung nach einem der vorhergehenden Ansprüche, **dadurch gekennzeichnet, dass** die Einrichtung (12) wenigstens einen elektromagnetischen oder piezoelektrischen Aktuator (13) aufweist.

4. Abgasnachbehandlungseinrichtung nach Anspruch 3, **dadurch gekennzeichnet, dass** der elektromagnetische Aktuator (13) eine bestrombare Spule (15) und einen mit der Spule (15) magnetisch zusammenwirkenden Anker (14) aufweist, wobei der Anker (14) mit einem Ventilelement (9) des Rückschlagventils (8) wirkverbunden ist.

5. Abgasnachbehandlungseinrichtung nach Anspruch 4, **dadurch gekennzeichnet, dass** das Ventilelement (9) des Rückschlagventils den Anker (14) bildet.

6. Abgasnachbehandlungseinrichtung nach Anspruch 4 oder 5, **dadurch gekennzeichnet, dass** das Ventilelement (9) durch wenigstens ein Federelement (10) in einen Ventilsitz (11) zum Verschließen einer Ventilöffnung (11') des Sperrventils (4) gedrängt wird, wobei der Aktuator (13) dazu ausgebildet ist, das Ventilelement (4) entgegen der Federkraft des Federelements (10) zu bewegen.

7. Abgasnachbehandlungseinrichtung nach Anspruch 6, **dadurch gekennzeichnet, dass** die Federkraft des Federelementes (10) derart gewählt ist, dass das Ventilelement (9) die Ventilöffnung (11') freigibt, wenn die Fördereinrichtung (3) Abgasnachbehandlungsmittel zu dem Dosierventil (6) fördert, und verschließt, wenn die Fördereinrichtung (3) abgeschaltet ist.

8. Abgasnachbehandlungseinrichtung nach Anspruch 6 oder 7, **dadurch gekennzeichnet, dass** das Federelement (10) und/oder das Ventilelement (9) auf der der Fördereinrichtung (3) abgewandten Seite der Ventilöffnung (11') angeordnet sind.

## Claims

1. Exhaust-gas aftertreatment device (1) for an internal combustion engine, in particular of a motor vehicle, having a dosing valve (6) for the dosed injection of a liquid exhaust-gas aftertreatment agent into an exhaust gas of the internal combustion engine, having a delivery device (3) for delivering the liquid exhaust gas aftertreatment agent from a tank (2) to the dosing valve (6), **characterized in that**, between the delivery device and the dosing valve (6), there is connected a shut-off valve (4) which is designed as a check valve (8) which can be opened by a delivery pressure of the delivery device (3), which shut-off valve is assigned a device (12) which, when actuated, opens the shut-off valve (4) regardless of the delivery pressure.

2. Exhaust-gas aftertreatment device according to Claim 1, **characterized in that** the device (12), when actuated, opens the check valve (8).

3. Exhaust-gas aftertreatment device according to one of the preceding claims, **characterized in that** the device (12) has at least one electromagnetic or piezoelectric actuator (13).

4. Exhaust-gas aftertreatment device according to Claim 3, **characterized in that** the electromagnetic actuator (13) has an energizable coil (15) and an armature (14) which magnetically interacts with the coil (15), wherein the armature (14) is operatively connected to a valve element (9) of the check valve (8).

5. Exhaust-gas aftertreatment device according to Claim 4, **characterized in that** the valve element (9) of the check valve forms the armature (14).

6. Exhaust-gas aftertreatment device according to Claim 4 or 5, **characterized in that** the valve element (9) is forced by at least one spring element (10) into a valve seat (11) for the purposes of closing off a valve opening (11') of the shut-off valve (4), wherein the actuator (13) is designed to move the valve element (4) counter to the spring force of the spring element (10).

7. Exhaust-gas aftertreatment device according to Claim 6, **characterized in that** the spring force of the spring element (10) is selected such that the valve element (9) opens up the valve opening (11') when the delivery device (3) delivers exhaust-gas aftertreatment agent to the dosing valve (6), and closes said valve opening when the delivery device (3) is deactivated.

8. Exhaust-gas aftertreatment device according to Claim 6 or 7, **characterized in that** the spring element (10) and/or the valve element (9) are arranged on that side of the valve opening (11') which is averted from the delivery device (3).

## Revendications

1. Dispositif de post-traitement des gaz d'échappement (1) pour un moteur à combustion interne, en particulier d'un véhicule automobile, comprenant une soupape de dosage (6) pour l'injection dosée d'un agent de post-traitement des gaz d'échappement fluide dans un gaz d'échappement du moteur à combustion interne, comprenant un dispositif de refoulement (3) pour refouler l'agence post-traitement des gaz d'échappement fluide depuis un réservoir (2) jusqu'à la soupape de dosage (6), **caractérisé en ce qu'**entre le dispositif de refoulement et la soupape de dosage (6) est branchée une soupape d'arrêt (4) qui est réalisée sous forme de clapet antiretour (8) pouvant être ouvert par une pression de refoulement du dispositif de refoulement (3), et auquel est associé un dispositif (12) qui, lors de son actionnement, ouvre la soupape d'arrêt (4) indépendamment de la pression de refoulement.

2. Dispositif de post-traitement des gaz d'échappement selon la revendication 1, **caractérisé en ce que** le dispositif (12), lors de son actionnement, ouvre le clapet antiretour (8).

3. Dispositif de post-traitement des gaz d'échappement selon l'une quelconque des revendications précédentes, **caractérisé en ce que** le dispositif (12) présente au moins un actionneur électromagnétique ou piézoélectrique (13).

4. Dispositif de post-traitement des gaz d'échappement selon la revendication 3, **caractérisé en ce que** l'actionneur électromagnétique (13) présente une bobine (15) pouvant être alimentée en courant et un induit (14) coopérant magnétiquement avec la bobine (15), l'induit (14) étant en liaison fonctionnelle avec un élément de soupape (9) du clapet antiretour (8).

5. Dispositif de post-traitement des gaz d'échappement selon la revendication 4, **caractérisé en ce que** l'élément de soupape (9) du clapet antiretour forme l'induit (14).

6. Dispositif de post-traitement des gaz d'échappement selon la revendication 4 ou 5, **caractérisé en ce que** l'élément de soupape (9) est poussé par au moins un élément de ressort (10) dans un siège de soupape (11) pour fermer une ouverture de soupape (11') de la soupape d'arrêt (4), l'actionneur (13) étant réalisé pour déplacer l'élément de soupape (4) à l'encontre de la force de ressort de l'élément de ressort (10).

7. Dispositif de post-traitement des gaz d'échappement selon la revendication 6, **caractérisé en ce que** la force de ressort de l'élément de ressort (10) est sélectionnée de telle sorte que l'élément de soupape (9) libère l'ouverture de soupape (11') lorsque le dispositif de refoulement (3) refoule un agent de post-traitement des gaz d'échappement vers la soupape de dosage (6) et la ferme lorsque le dispositif de refoulement (3) est déconnecté.

8. Dispositif de post-traitement des gaz d'échappement selon la revendication 6 ou 7, **caractérisé en ce que** l'élément de ressort (10) et/ou l'élément de soupape (9) sont disposés du côté de l'ouverture de soupape (11') opposé au dispositif de refoulement (3).
